# EUROPEAN PATENT APPLICATION

(11) **EP 4 745 937 A1**
(43) Date of publication of application: **20.05.2026**
(21) Application number: 25215982.7
(22) Date of filing: 14.11.2025
(51) Int. Cl.: G08G 1/01, B60W 40/09, G08G 1/0967, G06Q 40/08, G08G 1/00

(54) **METHODS AND SYSTEMS FOR OPTIMIZED STORAGE AND PROCESSING OF GEOSPATIAL DATA BY MOBILE COMPUTING DEVICES WHILE DETECTING DRIVING ACTIVITIES**

(30) Priority: 15.11.2024 US 202463721031 P
(71) Applicant: Cambridge Mobile Telematics Inc., Cambridge, MA 02142 (US)
(72) Inventor: Burkle, Bjorn, Cambridge, 02142 (US); Lee, Wing Kit, Cambridge, 02142 (US)
(74) Representative: Mewburn Ellis LLP

(57) **Abstract**

Methods and systems for providing alerts for unsafe driving activities are disclosed. In some embodiments, an application executing on a mobile device receives a plurality of geographic coordinates corresponding to points of interest within a geographic region. During a drive, the application receives measurements from vehicle sensors and determines vehicle locations in real time. The application generates a subset of coordinates within a predefined proximity to the vehicle at a first time during the drive, detects when the vehicle's deceleration rate exceeds a threshold associated with hard braking events, and calculates distances between the event location and each of the subset of coordinates. A shortest distance is compared to a threshold alerting distance, and the application outputs a hard braking alert in response to determining that the nearest point of interest is outside of the threshold alerting distance.

## Description

### CROSS-REFERENCES TO RELATED APPLICATIONS

This application claims priority to U.S. Provisional Patent Application No. 63/721,031, filed on November 15, 2024, entitled "METHODS AND SYSTEMS FOR OPTIMIZED STORAGE AND PROCESSING OF GEOSPATIAL DATA BY MOBILE COMPUTING DEVICES WHILE DETECTING DRIVING ACTIVITIES," the disclosure of which is hereby incorporated by reference in its entirety for all purposes.

### BACKGROUND OF THE INVENTION

Mobile devices offer an ever-improving suite of sensors whose data can be used to evaluate the surrounding environment and the mobile device's relationship thereto. These capabilities offer many possibilities for detecting when the device is in a vehicle, as well as the movements of the vehicle. As a result, insights into the unsafe driving tendencies of the person operating the vehicle may be obtained. However, despite the progress made in using mobile device sensors to detect potentially risky driving maneuvers, there is a need in the art for improved methods and systems for accurately and efficiently evaluating the risk associated with such maneuvers in relation to the local environment.

### SUMMARY

Embodiments of the present invention generally relate to optimized storage and processing of geospatial data by mobile computing devices while detecting driving activities, and more particularly, to selectively providing alerts for unsafe driving activities depending on the relative location of the unsafe driving activity in relation to locations of points of interest in the surrounding environment, such as traffic signals.

In some embodiments, a method of providing alerts for unsafe driving activities is provided. The method includes receiving, by an application executing on a mobile device, a plurality of geographic coordinates, each corresponding to a location of a traffic signal located within a geographic region. The method further includes receiving, by the application while the mobile device is disposed in a vehicle during a drive, measurements from one or more sensors disposed in the vehicle during the drive. The method further includes determining, by the application at a first time during the drive, a first location of the vehicle within a geographic region at the first time based on the measurements. The method further includes generating, by the application from the plurality of geographic coordinates, a subset of the plurality of geographic coordinates that are within a predefined proximity of the first location. The method further includes detecting, by the application at a second time during the drive, that a deceleration rate of the vehicle exceeded a predefined deceleration rate during a time period leading up to the second time based on the measurements collected by the one or more sensors. The method further includes determining, by the application, a second location of the vehicle within the geographic region during the time period based on the measurements. The method further includes generating, by the application, a plurality of distance measurements, each corresponding to a distance between the second location and a respective geographic coordinate of the subset of geographic coordinates. The method further includes comparing, by the application, a shortest distance measurement of the plurality of distance measurements to a predefined threshold alerting distance to determine whether the shortest distance measurement is greater than or equal to the predefined threshold alerting distance. The method further includes causing, by the application, a physical interface of the mobile device to output an indication of hard braking to a user of the mobile device during the drive in response to detecting that the deceleration rate of the vehicle exceeded the predefined deceleration rate during the time period and determining that the shortest distance measurement is greater than or equal to the predefined threshold alerting distance.

In some embodiments, generating the subset of geographic coordinates comprises: generating a second plurality of distance measurements, each corresponding to a distance between the first location and a respective geographic coordinate of the plurality of geographic coordinates; and selecting, for inclusion in the subset of geographic coordinates, each geographic coordinate of the plurality of geographic coordinates having a corresponding distance measurement of the second plurality of distance measurements that is less than or equal to a predefined proximity distance.

In some embodiments, the method further includes storing the plurality of geographic coordinates as a plurality of nodes in a k-dimensional tree. In some embodiments, generating the subset of geographic coordinates comprises searching within the k-dimensional tree for nodes that are within a range of geographic coordinates corresponding to the predefined proximity of the first location.

In some embodiments, the method further includes transmitting a request for geographic coordinates associated with traffic signals located within the geographic region to a remote server system. In some embodiments, the plurality of geographic coordinates are received from the remote server system in response to the request. In some embodiments, the method further includes: determining an initial location of the vehicle at a start time of the drive that is prior to the first time; and generating, from the plurality of geographic coordinates, an initial subset of the plurality of geographic coordinates that are within the predefined proximity of the initial location. In some embodiments, the method further includes updating the initial subset of the plurality of geographic coordinates at predefined time intervals during the drive. In some embodiments, the predefined proximity is based on a maximum travel distance of the vehicle within each predefined time interval.

In some embodiments, the one or more sensors disposed in the vehicle comprise a Global Navigation Satellite System (GNSS) receiver, and the measurements comprise location measurements generated by the GNSS receiver. In some embodiments, the one or more sensors disposed in the vehicle comprise an accelerometer of the mobile device that measures movement of the mobile device. In some embodiments, detecting that a deceleration rate of the vehicle exceeded the predefined deceleration rate comprises: filtering the movement measurements to identify a subset of the movement measurements that are attributable to the vehicle; and detecting, from the subset of the movement measurements, a forward deceleration that is greater than or equal to the predefined deceleration rate.

In some embodiments, the method further includes detecting, at a third time during the drive, that the deceleration rate of the vehicle exceeded the predefined deceleration rate during a second time period leading up to the third time based on the measurements collected by the one or more sensors; determining a third location of the vehicle within the geographic region during the second time period based on the measurements; generating a second plurality of distance measurements, each corresponding to a distance between the third location and a respective geographic coordinate of the subset of geographic coordinates; determining that a shortest distance measurement of the second plurality of distance measurements is less than the predefined threshold alerting distance; determining whether the traffic signal corresponding to the geographic coordinate having the shortest distance measurement to the third location was applicable to the vehicle during the second time period; and causing the physical interface of the mobile device to output a second indication of hard braking to the user during the drive in response to detecting that the deceleration rate of the vehicle exceeded the predefined deceleration rate during the second time period and determining that the traffic signal was not applicable to the vehicle. In some embodiments, determining whether the traffic signal was applicable to the vehicle comprises: determining whether the traffic signal is located on a same road segment as the vehicle during the second time period; and determining whether the vehicle was moving towards or away from the traffic signal during the second time period.

In some embodiments, the method further includes determining a speed of the vehicle at a start of the time period. In some embodiments, the predefined threshold alerting distance is based on the speed of the vehicle at the start of the time period. In some embodiments, the method further includes determining, at a third time during the drive, that a current location of the vehicle is within a predefined distance of a geofence boundary defined based on the predefined proximity of the first location; and generating an updated subset of the plurality of geographic coordinates that are within the predefined proximity of the current location.

In some embodiments, a system comprising an electronic device is provided. The electronic device may include one or more processors and a computer-readable medium comprising instructions that, when executed by the one or more processors, cause the one or more processors to perform operations comprising receiving a plurality of geographic coordinates, each corresponding to a location of a traffic signal located within a geographic region. The operations may further include receiving, while the electronic device is disposed in a vehicle during a drive, measurements from one or more sensors disposed in the vehicle during the drive. The operations may further include determining, at a first time during the drive, a first location of the vehicle within a geographic region at the first time based on the measurements. The operations may further include generating, from the plurality of geographic coordinates, a subset of the plurality of geographic coordinates that are within a predefined proximity of the first location. The operations may further include detecting, at a second time during the drive, that a deceleration rate of the vehicle exceeded a predefined deceleration rate during a time period leading up to the second time based on the measurements collected by the one or more sensors. The operations may further include determining a second location of the vehicle within the geographic region during the time period based on the measurements. The operations may further include generating a plurality of distance measurements, each corresponding to a distance between the second location and a respective geographic coordinate of the subset of geographic coordinates. The operations may further include comparing a shortest distance measurement of the plurality of distance measurements to a predefined threshold alerting distance to determine whether the shortest distance measurement is greater than or equal to the predefined threshold alerting distance. The operations may further include causing a physical interface of the electronic device to output an indication of hard braking to a user of the electronic device during the drive in response to detecting that the deceleration rate of the vehicle exceeded the predefined deceleration rate during the time period and determining that the shortest distance measurement is greater than or equal to the predefined threshold alerting distance.

In some embodiments, generating the subset of geographic coordinates comprises: generating a second plurality of distance measurements, each corresponding to a distance between the first location and a respective geographic coordinate of the plurality of geographic coordinates; and selecting, for inclusion in the subset of geographic coordinates, each geographic coordinate of the plurality of geographic coordinates having a corresponding distance measurement of the second plurality of distance measurements that is less than or equal to a predefined proximity distance. In some embodiments, the operations may include determining a speed of the vehicle at a start of the time period, wherein the predefined threshold alerting distance is based on the speed of the vehicle at the start of the time period.

In some embodiments, the system further comprises a remote server system. The remote server system may comprise a traffic signal datastore that stores the locations of the traffic signals located within the geographic region. In some embodiments, the remote server system transmits the plurality of geographic coordinates to the electronic device in response to receiving a request from the electronic device for geographic coordinates associated with traffic signals located within the geographic region. In some embodiments, the system further comprises a telematics device installed within the vehicle. In some embodiments, at least a subset of the measurements are received from one or more sensors of the telematics device during the drive.

In some embodiments, a non-transitory computer-readable medium is provided. The non-transitory computer-readable medium may comprising instructions that, when executed by one or more processors, cause the one or more processors to perform operations comprising receiving, by an application executing on a mobile device, a plurality of geographic coordinates, each corresponding to a location of a traffic signal located within a geographic region. The operations may further include receiving, by the application while the mobile device is disposed in a vehicle during a drive, measurements from one or more sensors disposed in the vehicle during the drive. The operations may further include determining, by the application at a first time during the drive, a first location of the vehicle within a geographic region at the first time based on the measurements. The operations may further include generating, by the application from the plurality of geographic coordinates, a subset of the plurality of geographic coordinates that are within a predefined proximity of the first location. The operations may further include detecting, by the application at a second time during the drive, that a deceleration rate of the vehicle exceeded a predefined deceleration rate during a time period leading up to the second time based on the measurements collected by the one or more sensors. The operations may further include determining, by the application, a second location of the vehicle within the geographic region during the time period based on the measurements. The operations may further include generating, by the application, a plurality of distance measurements, each corresponding to a distance between the second location and a respective geographic coordinate of the subset of geographic coordinates. The operations may further include comparing, by the application, a shortest distance measurement of the plurality of distance measurements to a predefined threshold alerting distance to determine whether the shortest distance measurement is greater than or equal to the predefined threshold alerting distance. The operations may further include causing, by the application, a physical interface of the mobile device to output an indication of hard braking to a user of the mobile device during the drive in response to detecting that the deceleration rate of the vehicle exceeded the predefined deceleration rate during the time period and determining that the shortest distance measurement is greater than or equal to the predefined threshold alerting distance.

### BRIEF DESCRIPTION OF THE DRAWINGS

Aspects and features of the various embodiments will be more apparent by describing examples with reference to the accompanying drawings, in which:
FIG. 1 illustrates an embodiment of a system for detecting and alerting drivers to unsafe driving activities.
FIG. 2 illustrates a simplified block diagram of a system that includes a detection and alerting device configured to detect and alert a driver of a vehicle to one or more driving activities, according to aspects of the present disclosure.
FIG. 3 illustrates a road map including the locations of traffic signals within a geographic area.
FIG. 4 illustrates a road map including the locations of a subset of traffic signals within a geographic area.
FIG. 5 illustrates a method of providing alerts for unsafe driving activities, according to some aspects of the present disclosure.

### DETAILED DESCRIPTION OF THE INVENTION

While certain embodiments are described, these embodiments are presented by way of example only and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

Computing devices equipped with myriad sensors have become ubiquitous. These sensors can capture motion data that unveils extensive information about the device's surroundings and the activities engaged in by its user, such as walking, running, or riding in a vehicle. Moreover, this data enables detailed analysis of the performance of these activities. For example, motion of a mobile phone disposed within a moving vehicle can be harnessed to discern various driving characteristics, such as average and instantaneous vehicle speed, longitudinal and lateral acceleration, location, elevation, and relative vehicle orientation in the real-world, among others.

Real-time insights about a vehicle's movements garnered from the sensors of a mobile device can offer corresponding revelations into driving tendencies, capabilities, and the overall risk or likelihood of a driver being involved in an accident. As such, monitoring a driver's real-time driving tendencies presents advantages for insurance companies, employers, training agencies, and the public at large. For instance, providing a driver with real-time feedback on safe and unsafe driving maneuvers can empower them to recognize and avoid hazardous driving behaviors in the future, thereby reducing their own risks of being involved in an accident as well as reducing the risk they pose to others.

However, relying solely on real-time motion data to monitor driving abilities also presents numerous challenges. One significant challenge lies in accurately distinguishing between driving maneuvers that are safe, or otherwise necessary to avoid an accident, in some instances but are unsafe in other instances when the motion of the vehicle looks the same for each instance. For example, while hard braking might typically be considered an unsafe driving maneuver or a sign of other unsafe driving activities in most cases, such as speeding, it could also result from avoiding a sudden obstacle or adhering to traffic signals. Similarly, swerving might indicate reckless driving, but it could also be a necessary maneuver to avoid a hazard on the road. Absent a further consideration of the context in which maneuvers that are typically unsafe are performed, including a consideration of where and/or when they occurred in relation to the local environment, detected instances of such maneuvers may be automatically classified as an instance of unsafe driving, which can lead to a number of negative outcomes.

In the context of providing a driver with real-time feedback for unsafe driving maneuvers, the negative outcomes may include providing negative feedback to drivers when they have actually performed an appropriate maneuver given the circumstances. For instance, consider a driver approaching a traffic signal who aggressively applies the brakes when the traffic signal changes from green to yellow in order to avoid running a red light, or to avoid an accident with a vehicle who slammed on the brakes to avoid running the red light when both vehicles could have passed through the intersection before the light changed to red. As another example, consider a driver approaching a green light at an intersection who aggressively applies the brakes to avoid a collision with another vehicle that is about to cross the intersection in front of them. In both cases, not only is the driver already aware that they aggressively applied the brakes, but doing so may have been the safer option. Thus, providing the driver with a notification that they just performed a hard braking maneuver will not help the driver recognize and avoid future instances of hard braking that are actually unsafe. Further, providing negative feedback in those instances could lead to confusion as to what the appropriate action should be in similar situations in the future.

In the context of assessing the overall driving abilities of a driver, and/or their risk profile, for insurance purposes, the negative outcomes may include generating inaccurate driver assessments and/or risk profiles. This could result in an insurance provider financially penalizing the driver by increasing their premiums for supposedly being an unsafe driver when the opposite is actually true. Additionally, or alternatively, the negative outcomes could include drivers who disable future alerts and/or the ability to collect motion data for future trips.

To address these challenges and negative consequences, additional data related to the circumstances surrounding the occurrences of potentially unsafe driving maneuvers can be collected and analyzed in conjunction with the motion data for the maneuvers. Specifically, to distinguish between safe, or at least intentional, instances of hard braking and unsafe, or at least inadvertent, instances of hard braking, contextual information such as the proximity to traffic signals, traffic signs, speed bumps, pot-holes, cross-walks, and/or other objects that tend to affect whether a hard braking event was safe or unsafe, can be considered.

However, while such additional considerations may seem straightforward in the abstract, implementing them on mobile computing devices presents its own unique set of technical challenges in terms of data collection, integration, and processing. For example, accurately capturing and updating the locations of relevant traffic signals, signs, and other road features requires robust and reliable data sources. Moreover, integrating this contextual information with real-time motion data necessitates advanced algorithms capable of processing large volumes of data efficiently and making real-time decisions.

Embodiments described herein address these and other challenges associated with relying solely on motion data to monitor driving abilities by providing systems and methods of storing and processing geospatial data in relation to detected instances of hard braking during a drive. Providing mobile computing devices with updated subsets of traffic signal locations within a broader geographic region based on the current location of the mobile computing device at multiple points during a trip may reduce data storage requirements on the mobile computing devices and improve the speed with which the mobile computing devices can identify the nearest traffic signal at a given point in time. Storing the traffic signals in specialized data structures, such as k-dimensional trees, may further reduce computational requirements associated with identifying the nearest traffic signal by organizing the data in a manner that allows for efficient querying and retrieval. Further, by conditioning the presentation of notifications for hard braking events on the distance to the nearest traffic signal at the time of the hard braking event, the system can reduce unnecessary distractions and improve user satisfaction.

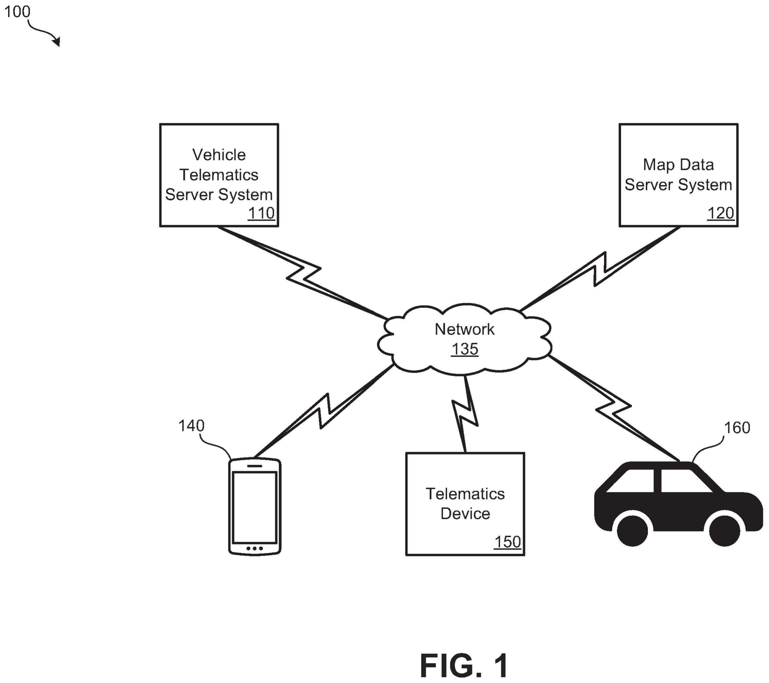

Further detail regarding the storage and processing of geospatial data to detect occurrences of hard braking in relation to traffic signal locations is provided in relation to the figures. FIG. 1 illustrates an embodiment of a system 100 for detecting and alerting drivers to unsafe driving activities. System 100 can include: vehicle telematics server system 110; map data server system 120; network 135; mobile device 140; telematics device 150; and vehicle 160. In some embodiments, one or more of the components of system 100 may be communicatively connected to other components of system 100 via network 135.

Vehicle telematics server system 110 can include one or more processors configured to perform various functions, such as detecting the occurrence of unsafe driving activities from telematics data provided by one or more devices disposed in a vehicle during a drive, determine which unsafe driving activities should be considered in assessments of a driver's overall driving abilities, and control whether, when, and/or how alerts are provided to drivers in response to the detection of unsafe driving activities (e.g., by vehicle telematics server system 110 or a device disposed in the vehicle), as further described herein. Vehicle telematics server system 110 can include one or more physical servers running one or more processes. Vehicle telematics server system 110 can also include one or more processes distributed across a cloud-based server system. In some embodiments, vehicle telematics server system 110 is connected over network 135 to any or all of the other components of system 100.

For instance, vehicle telematics server system 110 may connect to map data server system 120 to receive digital map data for one or more geographic areas. Map data server system 120 may be a server system, such as a cloud-based server system, connected through network 135 and capable of running one or more processes related to collecting, generating, and/or providing digital map data. In some embodiments, map data server system 120 is a commercially available mapping service, such as OpenStreetMap^{®}, and/or is communicatively connected to one or more commercially available mapping services to collect digital map data for various geographic areas of interest. For example, map data server system 120 may request digital map data for a geographic area of interest via one or more application programming interfaces (APIs) provided by one or more commercially available mapping services. Upon receiving the digital map data, map data server system 120 may store the digital map data in one or more data stores. For example, map data server system 120 may store the digital map data received from each mapping service in the format in which it was received and/or map data server system 120 may convert the received digital map data into universal or common format.

Additionally, or alternatively, map data server system 120 may include one or more processes that generate digital map data based on other types of data, such as aerial imagery, telematics data, and the like. For example, map data server system 120 may receive satellite or other aerial imagery of a geographic area and apply one or more image processing algorithms to identify roadways, road segments, traffic signals and/or signs, or the like within a geographic area. As another example, map data server system 120 may receive collections of telematics data, as described further herein, that track the movements of one or more vehicles within a geographic area. Based on the movements of the one or more vehicles, the locations of one or more road segments, traffic signals, traffic signs, or the like may be derived. Additionally, or alternatively, telematics data may be used to supplement previously collected and/or generated digital map data. For example, based on telematics data indicating that every vehicle traveling along a particular road segment has stopped at a same location, digital map data for the particular road segment may be updated to indicate the presence of a stop sign. As another example, based on telematics data indicating that vehicles traveling along a particular road segment routinely stop within a predefined distance of a same location, digital map data for the particular road segment may be updated to indicate the presence of a traffic signal (e.g., a stop-light).

Digital map data may include one or more structured collections of data points, lines, polygons, and the like that represent information on the geometry and properties of streets and road segments within a geographic area. Digital map data may further represent the physical layout of a street network using spatial coordinates, such as latitude and longitude, and may encode the connectivity between individual road segments. The geographic area represented by digital map data may range in size from a single intersection to a census block group, a neighborhood, a city, a state, a country, or any suitable geographic area within which a connection of roadways have been created for vehicular travel.

Digital map data may include information that can be used to derive various static properties or attributes associated with road networks, roadways, and/or individual physical road segments within a geographic area. As described in relation to road segments, static attributes may identify permanent or semi-permanent characteristics of a road segment. For example, static attributes may identify the type of a roadway or segment (e.g., highway, residential, secondary, etc), the dimensions of the road segment, the number of lanes in the road segment, the number of traffic directions, the curvature of the road segment, the type of dividers between lanes and/or between lanes traveling in different directions, the existence of pedestrian crossings, the existence and types of signage (e.g., stop signs, traffic signals, yield signs, merge signs, etc.), posted speed limits, the existence and type of lighting on a roadway, and the like. Put differently, while static road segment attributes may change, such as when a speed limit is changed or a new traffic signal is installed, static attributes do not depend on and/or are not affected by changes in traffic flow and/or traffic patterns.

Digital map data may further include information that can be used to derive various connectivity properties and/or connectivity attributes associated with each intersection between physical road segments in the geographic area that intersect. As described in relation to physical road segment intersections, connectivity attributes may identify permanent and/or semi-permanent characteristics of a physical intersection. For example, connectivity attributes may identify the angle at which two intersecting road segments meet, whether the segments are on an exit from or entry onto a highway, the difference in posted speed limits between the road segments, how many road segments are within a pre-determined distance of each other at an intersection, whether there are any restrictions in movement between intersecting road segments, whether traversing an intersection may involve driving in the face of opposing traffic, whether there are protected traffic signals covering the traversal of an intersection, and the like.

Network 135 can include one or more wireless networks, wired networks, public networks, private networks, and/or mesh networks. For example, network 135 can include one or more local area networks (LANs) connected to one or more wide area networks (WANs), such as the Internet. Additionally, or alternatively, network 135 may include one or more cellular and/or satellite-based communications networks.

Vehicle telematics server system 110 may receive driving data via network 135 attributable to movement of one or more vehicles. Driving data may be derived from sensor data measurements collected from telematics devices, including but not limited to sensor-equipped smartphones, Internet of Things (IoT) devices such as DriveWell Tags^{®} and on-board diagnostics (OBD) II devices, and data from connected vehicles with embedded telematics capabilities. For example, driving data for a particular vehicle, such as vehicle 160, may be collected and/or transmitted by the vehicle itself, and/or one or more devices disposed within the vehicle. For example, mobile device 140 and/or telematics device 150 disposed within vehicle 160 during a drive may collect driving data attributable to the movement and/or operation of vehicle 160 during the drive.

In some embodiments, vehicle 160 includes one or more components that collect and process data associated with vehicle operation. For example, vehicle 160 may include a Global Positioning System (GPS) receiver, an engine control unit (ECU), transmission control unit (TCU), inertial measurement unit (IMU), collision avoidance and warning systems, radar subsystems, and the like. Additionally, or alternatively, vehicle 160 may include one or more components that transmit and receive the data associated with vehicle operation via one or more communication protocols, such as Wi-Fi, Bluetooth^{®}, cellular communications, and the like.

Mobile device 140 may be a smartphone, tablet computer, laptop computer, gaming device, or some other form of computerized device that can collect, process, transmit, and receive one or more types of data, such as motion, location, and/or driving data. Telematics device 150 may be a special purpose computer that can be permanently or semi-permanently installed within and/or communicatively connected to a vehicle, such as vehicle 160. For example, telematics device 150 may be fixed to an interior surface of a vehicle, such as a windshield, engine compartment, and the like. Additionally, or alternatively, telematics device 150 may be coupled to a data port, such as an OBD port and/or universal serial bus (USB) port of a vehicle. Once fixed to the vehicle and/or connected with a data port, telematics device 150 may collect, process, transmit, and receive one or more types of data, such as motion, location, and/or driving data, as described further herein.

When both a mobile device and a telematics device are present in the vehicle, data streams from each device may be synchronized using timestamp alignment or network time protocols. The system may resolve conflicts or discrepancies in sensor data by assigning confidence scores or reliability weights to each source. In some cases, the telematics device may provide more accurate or granular measurements of vehicle speed, braking force, or engine status, while the mobile device may offer superior location accuracy or user interface capabilities. The system may aggregate, cross-validate, and prioritize data from both devices to enhance overall detection accuracy and user experience.

Mobile device 140, telematics device 150, and/or vehicle 160 may each include one or more processors configured to collect, analyze, and transmit data attributable to movement and/or operation of a vehicle. For example, mobile device 140, telematics device 150, and/or vehicle 160 may include one or more sensors, such as a Global Positioning System (GPS) receiver, one or more accelerometers, one or more gyroscopes, one or more compasses, one or more magnetometers, one or more barometers, or the like, that can be used to collect data attributable to a vehicle's location, movement, and/or operations. Additionally, or alternatively, mobile device 140, telematics device 150, and/or vehicle 160 may collect and/or receive vehicle operating data, such as vehicle speed, compass headings, or the like, from one or more components of a vehicle, such as an ECU, TCU, and the like. Motion data and/or vehicle operating data collected while driving may be referred to as driving data or telematics data.

Telematics data may refer to the unprocessed, unfiltered information gathered from various sensors and/or computing devices disposed in a vehicle during a drive, such as mobile device 140, telematics device 150, and/or vehicle 160, that pertain to a vehicle's operation and surrounding environment. This data may include GPS coordinates, accelerometer and gyroscope readings for measuring acceleration, braking, and vehicle orientation, vehicle speed, or the like. In some embodiments, such data further includes engine Revolutions Per Minute (RPM), fuel level, and other relevant vehicle parameters obtained via Bluetooth or OBD-II interfaces. Additionally, raw telematics data may encompass contextual information such as timestamps, weather conditions, and traffic congestion obtained from network connections or other external sources. The collected telematics data may be stored in a structured format, such as JavaScript Object Notation (JSON) or Comma-Separated Values (CSV), ready for further processing and analysis to derive insights into driving behavior, vehicle performance, and environmental conditions.

Telematics data may additionally, or alternatively, include processed telematics data. Processed telematics data may refer to the refined and analyzed information derived from raw telematics data. This processed data undergoes various algorithms, statistical methods, and data fusion techniques to extract meaningful insights and actionable intelligence related to vehicle operation, driver behavior, and environmental conditions. Such information may include details about the occurrence of one or more unsafe driving activities (e.g., times, locations, and severities of one or more hard braking, speeding, mobile device usage, swerving, hard acceleration, or other similar unsafe driving activities), contextual data about each drive (e.g., time-of-day, weather, traffic, road-type, extrinsic road risk), whether a crash was detected during the drive, information about a vehicle used for the drive (e.g., vehicle make, model, and year, information about device-vehicle interfaces, or the like), and other similar information.

Mobile device 140, telematics device 150, and/or vehicle 160 may transmit processed telematics data, such as indications of the occurrence of safe versus unsafe driving activities and related contextual data, and/or raw telematics data used to identify the driving activities, to one or more devices and/or systems for additional processing. For example, in response to detecting an unsafe driving activity, mobile device 140, telematics device 150, and/or vehicle 160 may transmit an indication of the unsafe driving activity to vehicle telematics server system 110. Vehicle telematics server system 110 may further analyze use the indication of unsafe driving activity, and/or underlying raw telematics data collected around the time when the driving activity occurred, to generate and/or update an assessment of the driving abilities of a driver associated with mobile device 140, telematics device 150, and/or vehicle 160.

Additionally, or alternatively, mobile device 140, telematics device 150, and/or vehicle 160 may generate a notification in real-time, and/or near real-time, to alert the driver to the detected occurrence of a safe versus unsafe driving activity. To illustrate, mobile device 140, telematics device 150, and/or vehicle 160 may analyze raw telematics data in real-time as it is received from one or more sensors to detect the occurrence of unsafe driving activities as they occur during a drive. In response to detecting the occurrence of an unsafe driving activity, such as a hard braking event, in real-time and/or near real-time, mobile device 140, telematics device 150, and/or vehicle 160 may generate an alert or other notification indicative of the unsafe driving activity.

Mobile device 140, telematics device 150, and/or vehicle 160 may apply one or more rules to determine whether and/or when to present the alert or other notification to the driver of the vehicle. The one or more rules may include minimum threshold criteria related to the environment and/or circumstances in which an unsafe driving activity occurred that must be met before providing an alert or other notification to the driver. For example, the minimum threshold criteria for providing alerts for instances of hard braking may include minimum and/or maximum distances between the location where the hard brake occurred and nearby traffic signals (e.g., stop lights). Thus, as described further herein, determining whether to provide an alert in response to detecting a hard braking event may include determining where the hard braking event occurred in relation to nearby traffic signals.

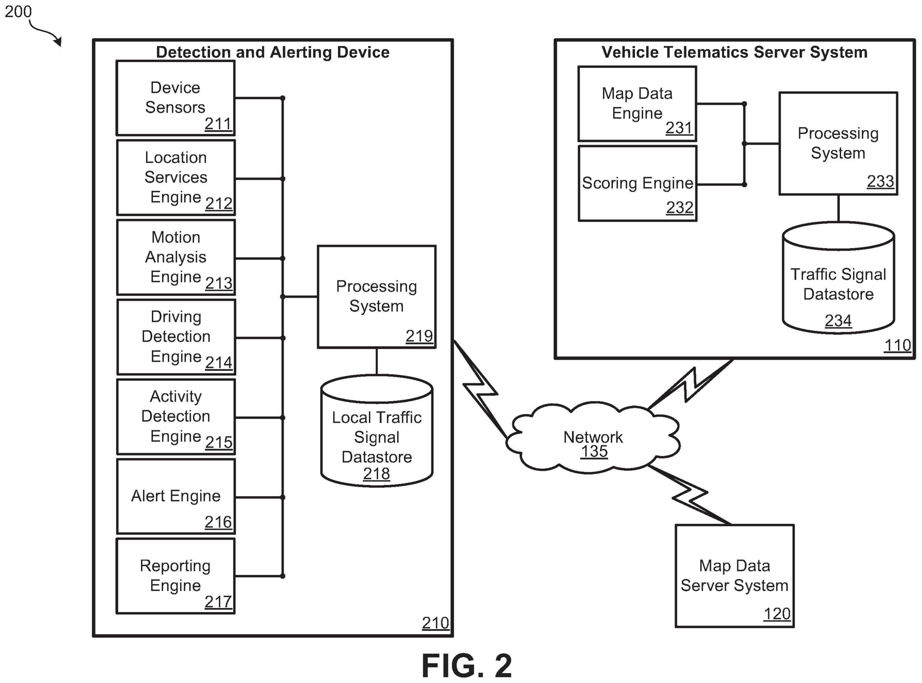

**FIG. 2** illustrates a simplified block diagram of a system 200 that includes a detection and alerting device 210 configured to detect and alert a driver of a vehicle to one or more driving activities according to aspects of the present disclosure. System 200 may include the same or similar components as system 100 described above. For example, system 200 may include vehicle telematics server system 110, network 135, and map data server system 120.

As described herein, detection and alerting device 210 may include one or more software and/or hardware components configured to collect telematics data associated with operation of a vehicle, analyze the telematics data to detect unsafe driving activities, and cause detection and alerting device 210 to perform one or more actions in response. For example, and as illustrated, detection and alerting device 210 may include: device sensors 211, location services engine 212, motion analysis engine 213, driving detection engine 214, activity detection engine 215, alert engine 216, and reporting engine 217. As further illustrated, detection and alerting device 210 can include one or more data stores and/or databases, such as local traffic signal datastore 218. Detection and alerting device 210 may further include processing system 219 that can coordinate the execution of the various functionalities provided by the plurality of hardware and/or software components, in addition to communicating with the one or more data stores and/or databases.

Detection and alerting device 210 may be a mobile device, such as mobile device 140, a telematics device, such as telematics device 150, and/or a vehicle, such as vehicle 160, as described above. Additionally, or alternatively, one or more components of detection and alerting device 210 may be distributed across, implemented by, or otherwise performed by a combination of mobile device 140, telematics device 150, and/or vehicle 160. For example, device sensors 211 may include various sensors of mobile device 140, telematics device 150, and/or vehicle 160, that are collected and/or analyzed by a processing system of a single device, such mobile device 140 and/or telematics device 150.

Device sensors 211 may include one or more hardware and/or software sensors that detect and/or measure information about a vehicle and its surroundings during a drive. For example, device sensors 211 may include an accelerometer that measures movements and orientation of detection and alerting device 210, a gyroscope that measures rotation about one or more axes, a magnetometer that measures orientation relative to magnetic north, a Global Navigation Satellite System (GNSS) receiver that measures location and elevation, a proximity sensor that measures distances to nearby objects, an ambient light sensor, a barometer for measuring atmospheric pressure, a temperature sensor for measuring environmental or internal device temperature, and one or more cameras for capturing images and videos across one or more spectrums if visible and invisible light.

Measurements from device sensors 211 may be sampled by processing system 219 in response to requests for measurements from motion analysis engine 213, driving detection engine 214, and/or activity detection engine 215. For example, in response to a request, processing system 219 may begin sampling and storing signal values for a particular sensor. Requests from the various components may include indications of the desired data collection frequency or resolution. For example, components may request that measurements be sampled at increased frequencies and/or higher resolutions to enable more accurate assessments of the motions experienced by detection and alerting device 210 (e.g., to detect fine movements). As another example, components may request that measurements be sampled at reduced frequencies and/or lower resolutions to save resources (e.g., battery and processing power) when making general assessments, such as determining whether acceleration measurements, changes in location, or the like are attributable to a user walking or traveling in a vehicle.

When multiple sensors are available, the system may employ sensor fusion techniques to combine data streams and increase reliability. For example, GNSS location estimates may be fused with inertial sensor data using extended Kalman filters or other state estimation algorithms to compensate for signal loss or multipath effects. Accelerometer readings may be cross-referenced with vehicle speed data from OBD-II/CAN bus to distinguish between abrupt braking and device handling. In cases where both mobile device and telematics device data are available, the system may prioritize the most accurate or timely source, or reconcile differences using weighted averaging or confidence scoring methods. This fusion process improves the accuracy of driving event detection and contextual analysis under a range of environmental and operational conditions.

Location services engine 212 may include one or more software and/or hardware components configured to determination the location of a vehicle in which detection and alerting device 210 is disposed. For example, location services engine 212 may include one or more Global Navigation Satellite System (GNSS) receivers configured to receive signals from GNSS satellites and calculate the precise geographic location of the vehicle. These GNSS receivers may work in conjunction with other positioning technologies employed by location services engine 212, such as Wi-Fi positioning, cellular triangulation, and inertial navigation, to enhance accuracy and reliability, especially in environments where satellite signals may be weak or obstructed.

Location services engine 212 may further include one or more components configured to determine the location of the vehicle in relation to various points of interest in the surrounding environment. For example, location services engine 212 may include one or more processes for identifying one or more traffic signal within close proximity to the vehicle at a given point in time based on the location of the vehicle at that point in time. Additionally, or alternatively, location services engine 212 may include one or more processes for identifying a nearest traffic signal to the vehicle at a given point in time, and/or the distance between the nearest traffic signal and the vehicle at the given point in time, based on the location of the vehicle at the given point in time.

Location services engine 212 may identify the one or more traffic signals, and/or the nearest traffic signal, from a plurality of traffic signals within a geographic region. The plurality of traffic signals considered by location services engine 212 may be stored in local traffic signal datastore 218. Location services engine 212 may request and/or receive a list of traffic signals and their associated locations from vehicle telematics server system 110 and/or map data server system 120 and store the locations in local traffic signal datastore 218. In some embodiments, the list of traffic signals and their associated locations received from vehicle telematics server system 110 cover a geographic region, such as a city, a county, a state, and/or a country.

In some embodiments, the list of traffic signals and their associated locations are received and/or stored in a tree data structure, such as a k-dimensional ("k-d") tree, or other spatial data structure designed to efficiently manage and query multi-dimensional data. For example, given the GPS coordinates for each traffic signal within a geographic region, the GPS coordinates for each traffic signal may be converted to a Mercator projection, or other similar 2-dimensional coordinate system. Once converted to a 2-dimensional coordinate system, a k-d tree may be constructed by recursively partitioning the space based on the coordinates of the traffic signals.

Specifically, the construction process may begin by selecting a dimension (e.g., x or y) and sorting the traffic signals based on their coordinates in that dimension. The median point along this dimension may be chosen as the root node, effectively splitting the data into two halves. The left subtree contains all traffic signals with coordinates in that dimension less than or equal to the median, while the right subtree contains all traffic signals with coordinates in that dimension greater than the median. This process is then recursively applied to each subtree, alternating between dimensions at each level of the tree, until all points are inserted into the k-d tree.

This hierarchical structure may allow for efficient querying of traffic signals based on spatial proximity. For instance, to identify all traffic signals within a specified radius of a given location, the k-d tree can be traversed to quickly eliminate large portions of the search space that fall outside the radius, focusing only on relevant regions. Similarly, nearest neighbor searches can be performed efficiently by exploring the most promising branches of the tree first and pruning others based on distance calculations.

In some embodiments, the k-dimensional tree data structure is constructed on the mobile device or telematics device during initialization or upon receipt of updated traffic signal location data. The construction process may include parsing received location data, converting geographic coordinates to a suitable projection (e.g., Mercator), and recursively partitioning the data as described above. When new traffic signals are added or existing signals are removed (e.g., due to map updates or changes in infrastructure), the tree may be incrementally updated or reconstructed to maintain query efficiency. Range search operations, such as identifying all traffic signals within a specified radius of the current vehicle location, may be performed using depth-first or breadth-first traversal algorithms, with early pruning of branches that fall outside the search region. In addition to range searches, nearest neighbor queries may be performed to rapidly identify the closest traffic signal to a given event location. The tree structure may also support dynamic updates during the drive, enabling the system to add or remove nodes in response to changes in the traffic environment or user preferences.

The list of traffic signals from vehicle telematics server system 110 and/or map data server system 120 may be based on a current location of detection and alerting device 210 and/or the vehicle in which detection and alerting device 210 is disposed. In response to a request for traffic signals that includes a geographic location, location services engine 212 may receive the location of traffic signals that are within a predefined radius of the location. For example, location services engine 212 may receive a list of traffic signals, and their associated geographic locations, that are within 1 mile, 5 miles, 25 miles, or another suitable radius around a location specified by location services engine 212. The location specified by location services engine 212 may be the current location of detection and alerting device 210 at the time location services engine 212 transmits the request. Additionally, or alternatively, the location may be selected from one or more locations where the vehicle remains stationary most often (e.g., over night) and/or where a majority of trips detected by detection and alerting device 210 originate and/or terminate, such as the location of a user's residence. In some embodiments, the radius is selected based on a maximum and/or average travel distance of trips for which detection and alerting device 210 was disposed in a vehicle. For example, location services engine 212 may request and/or receive traffic signals that are within one or more standard deviations in excess of the average trip distance.

Depending on the number of traffic signals in a geographic region, selecting a radius size corresponding to an average and/or maximum trip distance may return a computationally prohibitive list of traffic signals, such that on average, and given the processing power and algorithmic efficiency of location services engine 212, identifying the nearest traffic signal to a given location would require excessive processing bandwidth and/or would take longer than an allowable amount of time.

To maintain a computationally manageable list of traffic signals, location services engine 212 may request, receive, and/or generate a limited list of traffic signals that are within a smaller radius than an average and/or maximum trip distance and subsequently request, receive, and/or generate updated lists at regular and/or prescheduled intervals during a trip in a vehicle. For example, after requesting/receiving an initial list of traffic signals within a 5 mile radius of the location of detection and alerting device 210 at the start of a trip, location services engine 212 may request/receive an updated list of traffic signals every 5 minutes, 10 minutes, 25 minutes, or another suitable amount of time.

As another example, after requesting/receiving an initial list of traffic signals for a larger geographic region, a subset of the traffic signals that are within a predefined radius of the location of detection and alerting device 210 at the start of a trip may be selected, and subsequently updated by location services engine 212 at predefined intervals during the trip. In some embodiments, location services engine 212 computes the distances between a particular location and each of the locations of the traffic signals in the initial list and selects the traffic signals for the subset that are less than the predefined radius distance.

To ensure that location services engine 212 requests/receives/generates an updated list of traffic signals before the vehicle enters a geographic region not covered by the current list of traffic signals, the update intervals and/or query radii may be further based on a current speed of the vehicle at the time of the update, an average speed of the vehicle for a predefined amount of time leading up to the time of the update, and/or the average speed of the vehicle for the duration of the trip leading up to the time of the update. For faster speeds, the interval between updates may be shortened and/or the search radius may be increased compared to slower speeds.

Additionally, or alternatively, location services engine 212 may dynamically request/receive/select updated lists of traffic signals based on the real-time location of the vehicle. For example, after receiving/selecting an initial list of traffic signals, a geofence may be defined for location services engine 212 that corresponds to the geographic region covered by the initial list of traffic signals. Subsequently, upon detecting that detection and alerting device 210 has crossed the geofence boundary and/or has come within a predefined distance of the geofence boundary, location services engine 212 may request, receive, and/or select an updated list of traffic signals for a new geographic region surrounding the current location of detection and alerting device 210.

The intervals at which the subset of traffic signals is updated may be determined based on predefined schedules (e.g., every five minutes), vehicle movement patterns, or contextual factors such as changes in speed or deviation from a known route. In some implementations, the system continuously monitors the vehicle's position relative to the boundaries of the current subset coverage area (i.e., geofence). When the vehicle approaches or crosses a geofence boundary, a new subset is requested to ensure that nearby traffic signals are available for rapid querying. The geofence may be dynamically resized based on vehicle speed, direction, or anticipated route, enabling more efficient data management and minimizing latency in event detection and alerting.

While described herein as requesting and/or receiving a list of traffic signals within a circular region defined by a central location and a radius, the list of traffic signals may be selected from within other shapes and/or sizes of geographic regions. For example, location services engine 212 may request and/or receive a list of traffic signals within a rectangular region, a polygonal area, along one or more predefined routes, or the like. As another example, location services engine 212 may request and/or receive a list of traffic signals within a conical region that extends outwards for a predefined distance in the same direction as the current direction of travel of the vehicle and opens at a predefined angle. These different geographic shapes allow for more flexible and context-specific data retrieval, optimizing the relevance and accuracy of the traffic signal information in relation to the vehicle's current and anticipated locations.

This capability can be particularly useful in urban areas with irregular street layouts or for route-specific applications where traffic signals along a particular path are of interest. For example, location services engine 212 may maintain a permanent and/or semi-permanent list of traffic signals that are located along one or more routes typically followed by the driver, such as the routes between the driver's home and work, school, the grocery store, or other locations frequently visited by the driver. The list of traffic signals along such routes may be maintained in addition to and/or instead of the lists of traffic signals selected from the geographic region around a current and/or predefined location. For example, location services engine 212 may only request and/or receive additional lists of traffic signals after determining that the vehicle has deviated from one or more predefined routes for which a list of traffic signals already exists within local traffic signal datastore 218.

Motion analysis engine 213 may include one or more processes for receiving, transforming, and/or analyzing signals from device sensors 211. As described above, raw signals may be received from one or more sensors, such as one or more accelerometers, one or more magnetometers, one or more gyroscopes, one or more GNSS receivers, one or more barometers, one or more thermostats, or the like. Motion analysis engine 213 may convert raw sensor signals into measurements of motion experienced by detection and alerting device 210, the relative orientation of detection and alerting device 210 with respect to its surroundings, and/or measurements about the surrounding environment, such as changes in air pressure, ambient noise, temperature, or the like. In some embodiments, motion analysis engine 213 analyzes motion, orientation, and/or environmental measurements to determine an activity being performed by a user in relation to detection and alerting device 210. Activities detectable by motion analysis engine 213 may include whether a user is stationary, walking, running, bicycling, driving, interacting with detection and alerting device 210, or the like.

Motion analysis engine 213 may include one or more processes for analyzing motion, orientation, and/or environmental measurements for detection and alerting device 210. Motion analysis engine 213 may analyze the motion, orientation, and/or environmental measurements from device sensors 211 to determine whether detection and alerting device 210 is disposed in a vehicle during a drive. Motion analysis engine 213 may determine that detection and alerting device 210 is disposed in a vehicle during a drive based on a determination that detection and alerting device 210 accelerated at a rate consistent with vehicular motion, that detection and alerting device 210 is travelling at a speed consistent with vehicular motion, or the like. In some embodiments, motion analysis engine 213 analyzes measurements to distinguish between motion caused by a vehicle or other motion, such as a user physically interacting with detection and alerting device 210. Motion analysis engine 213 may execute one or more filters on the motion and/or orientation data to distinguish between motion caused by a vehicle or other motion. Filtering the data may include executing one or more software and/or hardware filters on measurements in the frequency domain, such as one or more low-pass filters, band-pass filters, high pass filters, infinite impulse response filters, or the like. Additionally, or alternatively, filtering the data may include inputting measurements into a trained machine learning model and/or neural network.

Motion analysis engine 213 may include one or more processes for detecting and recording vehicle dynamics during a drive, such as lateral and longitudinal accelerations, current and average speed, or the like. Motion analysis engine 213 may analyze motion attributable to a vehicle to determine the one or more components of the vehicle's dynamics during a drive. Motion analysis engine 213 may input motion and/or orientation measurements attributable to a vehicle to one or more machine learning models and/or neural networks to determine the one or more components of the vehicle's dynamics. Motion analysis engine 213 may record vehicle dynamics in association with individual drives, such as in a drive database and/or in driver database.

Driving detection engine 214 may include one or more processes for determining whether a user associated with detection and alerting device 210 is actively driving a vehicle and/or if detection and alerting device 210 is disposed in a vehicle associated with the user. Driving detection engine 214 may determine whether the user is actively driving in response to an indication from motion analysis engine 213 that detection and alerting device 210 is disposed within a vehicle during a drive. While described as a determination of whether a user is actively driving a vehicle, such a determination can include a determination that the user is in control of the vehicle's operation regardless of whether the vehicle is actively moving.

Whether the user associated with detection and alerting device 210 is actively driving the vehicle may control how other components of detection and alerting device 210 operate. For example, in cases where driving detection engine 214 determines that the user is not actively driving the vehicle, and is instead a passenger in the vehicle, driving detection engine 214 may cause other components, such as location services engine 212, motion analysis engine 213, activity detection engine 215, alert engine 216, and/or reporting engine 217 to enter a suspended or reduced activity state. Entering a reduced or suspended activity state during times when the user is a passenger may allow detection and alerting device 210 to conserve processing bandwidth and/or power consumption that would otherwise be required to monitor for safe versus unsafe driving activities that could be attributed to the user.

Driving detection engine 214 may determine that the user is driving the vehicle based on available and/or active connections with other devices in local proximity to detection and alerting device 210. For example, driving detection engine 214 may determine whether the user is driving the vehicle based on an active audio (e.g., Bluetooth^{®} or other wired/wireless connection) with a vehicle's infotainment or other audio/visual systems. As another example, driving detection engine 214 may determine that the user is driving by analyzing motion data collected around the time when the trip started to determine whether detection and alerting device 210 entered the vehicle from the driver's side and is located in the front of the vehicle.

Activity detection engine 215 may include one or more processes for detecting safe and/or unsafe driving activities. Safe driving activities may include a vehicle traveling at or below a safe or posted speed limit, forward accelerations or decelerations at or below a safe acceleration or deceleration threshold, lateral accelerations at or below a safe lateral acceleration threshold, or the like. Unsafe driving activities may include a vehicle traveling at or above a safe or posted speed limit, forward accelerations or decelerations at or above a safe acceleration or deceleration threshold (e.g., hard braking), lateral accelerations at or above a safe lateral acceleration threshold (e.g., swerving, aggressive lane changes, unsafe cornering), interactions with detection and alerting device 210, or the like. Activity detection engine 215 may analyze driving activity data and/or vehicle dynamic data from motion analysis engine 213 to detect safe and/or unsafe driving activities. For example, activity detection engine 215 may compare driving activity data to one or more thresholds to detect occurrences of safe and/or unsafe driving activities. Additionally, or alternatively, activity detection engine 215 may analyze motion data attributable to a user of detection and alerting device 210 to detect unsafe driving activities, such as when the user is interacting with detection and alerting device 210 in an unsafe or distracting manner.

Activity detection engine 215 may detect driving activities in real-time during a drive. For example, activity detection engine 215 may receive a stream of driving activity data from motion analysis engine 213 as it is collected and converted from device sensors 211. To reduce battery and processing consumption by detection and alerting device 210, activity detection engine 215 may be limited to detecting driving activities performed by the user of detection and alerting device 210. For example, in response to an indication from driving detection engine 214 that the user of detection and alerting device 210 is not driving a vehicle, activity detection engine 215 may stop analyzing driving activity data and/or instruct device sensors 211 and/or motion analysis engine 213 to adjust their operations, such as by reducing the frequency with which sensor measurements are collected by device sensors 211. Additionally, or alternatively, activity detection engine 215 may cause device sensors 211 and/or motion analysis engine 213 to increase data collection and processing in response to determining that the user is driving the vehicle.

Alert engine 216 may include one or more processes for notifying the user of detection and alerting device 210 to safe and/or unsafe driving activities performed by the user. For example, in response to an indication (e.g., from activity detection engine 215) that the user performed an unsafe driving activity and/or maneuver, such as slamming on the brakes, speeding, swerving, or the like, alert engine 216 may cause detection and alerting device 210 to output an indication to the user of the unsafe driving activity. Alert engine 216 may cause detection and alerting device 210 to output one or more types of alerts and/or notifications in response to detecting safe and/or unsafe driving activities. For example, alert engine 216 may generate an audio alert, a haptic alert, a visual alert, or a combination of the three. In some embodiments, the type and/or characteristics of an alert may be specific to the detected driving activity. For example, audio alerts for driving safely may sound different from audio alerts for unsafe driving activities.

Alert engine 216 may provide alerts via available and/or active audio routes. For example, in response to detecting an unsafe driving activity, alert engine 216 may create an audio alert and provide it to an audio interface of detection and alerting device 210 for output via an active audio route. Active audio routes may include one or more speakers integrated with detection and alerting device 210 and/or one or more speakers connected via a wired and/or wireless connection with detection and alerting device, such as the speakers of a vehicle to which detection and alerting device 210 is connected. Additionally, or alternatively, alert engine 216 may provide alerts via one or more displays, such as an integrated display of detection and alerting device 210 and/or a display integrated within a vehicle to which detection and alerting device 210 is connected.

In some embodiments, alert engine 216 provides alerts in real-time as driving activity is detected by activity detection engine 215 to provide users with instant feedback about their driving performance. Additionally, or alternatively, alert engine 216 may delay alerts to reduce distractions and/or device chatter that could lead to a user disabling alerts altogether. For example, alert engine 216 may delay alerts until after a predefined number of occurrences of a driving activity has been performed during a single drive or during multiple drives.

In some embodiments, alert engine 216 filters, or otherwise silences, alerts based on whether the user of detection and alerting device 210 is driving or is a passenger. For example, in response to an indication that an unsafe driving activity was detected (e.g., by activity detection engine 215), alert engine 216 may determine whether the user of detection and alerting device 210 is actively driving the vehicle in which detection and alerting device 210 is disposed. Alert engine 216 may determine whether the user of detection and alerting device 210 is actively driving the vehicle based on an indication from driving detection engine 214, as described above.

Additionally, or alternatively, alert engine 216 may filter, silence, ignore, or otherwise dismiss alerts for one or more types of unsafe driving activities based the location at which the unsafe driving activity occurred in relation to the surrounding environment. For example, in response to an indication that a hard braking event was detected (e.g., by activity detection engine 215), alert engine 216 may determine whether to provide an alert to the user based on the locations of one or more traffic signals in relation to the location at which the hard braking event occurred. In response to determining that a hard braking event occurred within a threshold distance of a traffic signal, alert engine 216 may filter or dismiss the corresponding alert. In response to determining that the hard braking event occurred outside of the threshold distance of a traffic signal, alert engine 216 may proceed to present the alert to the user.

Alert engine 216 may determine where hard braking events occurred in relation to nearby traffic signals in combination with location services engine 212. In some embodiments, alert engine 216 provides an indication of a hard braking event to location services engine 212. The indication may include a time at which the hard braking event occurred. Based on the time, location services engine 212 can determine the location at which the hard braking event occurred. Additionally, or alternatively, the indication may include the location of the hard braking event.

In response, location services engine 212 may identify one or more traffic signals that are within a predefined distance of the location and provide the list of traffic signals to alert engine 216 along with their associated locations. For example, as described above, location services engine 212 may convert the predefined distance around the location into a range of 2-dimensional coordinates in the coordinate system used to construct a k-d tree of the traffic signals within the geographic region, and search the k-d tree for nodes that are within that range.

Alert engine 216 may calculate the distances between the location of the hard braking event and the one or more traffic signals. Additionally, or alternatively, location services engine 212 may calculate the distances between the location of the hard braking alert and the one or more traffic signals and provide the distances to alert engine 216. Alert engine 216 may compare the distances to the threshold distance to determine whether to provide an alert to the user for the hard braking event. Additionally, or alternatively, location services engine 212 may compare the distances to the threshold and provide an indication of whether any of the distances are within the threshold distance to alert engine 216.

In some embodiments, the list of traffic signals identified within a predefined proximity to the location of a hard braking event is further filtered to those traffic signals that could have been applicable to the vehicle at the time of the hard braking event. As described herein, an applicable traffic signal is one that is on the same road segment as the vehicle and/or in the direction of travel of the vehicle at the time of the hard braking event. After identifying traffic signals within a predefined radius of the location of the hard braking event, and before or after determining the distance between the location of the hard braking event and the traffic signals, alert engine 216 and/or location services engine 212 may determine whether and/or which of the traffic signals are on a same road segment as the vehicle and/or whether the vehicle was moving towards or away from the traffic signals. In response to determining that the vehicle was within a threshold distance of a traffic signal, and that the traffic signal was applicable to the vehicle (e.g., that the vehicle was approaching the traffic signal at the time of the hard brake), alert engine 216 may silence or otherwise dismiss the corresponding alert. In response to determining that the vehicle was within a threshold distance, but that the traffic signal was not applicable to the vehicle (e.g., that the vehicle had already passed the traffic signal or that the traffic signal was on another road), alert engine 216 may proceed to present the alert to the user of detection and alerting device 210.

In some embodiments, the distance threshold for determining whether to provide an alert for hard braking that occurred near a traffic signal is determined based on the speed of the vehicle at and/or leading up to the hard braking event. For example, for higher speeds, the distance threshold may be set to a greater value to account for the increased stopping distance and reaction time required at higher velocities. Conversely, for lower speeds, the distance threshold may be set to a smaller value, as the stopping distance and reaction time required are reduced. By dynamically adjusting the distance threshold based on the vehicle's speed, the system can more accurately assess whether the hard braking event was a result of an expected stop at a traffic signal or an unsafe driving behavior, thereby improving the precision and relevance of the alerts provided to the driver.

While described herein in relation to silencing alerts for hard braking based on the proximity to a traffic signal, alert engine 216 may apply similar rules to determine when to provide alerts for hard braking based on the relative locations of other points of interest. As used herein, the phrase "point of interest" is intended to broadly cover any physical or virtual element associated with a roadway that may influence or regulate vehicular movement, driver behavior, or traffic safety. Additional or alternative terms for these elements may include traffic control features, traffic management features, road safety features, traffic control devices, and road safety devices. Examples of other points of interest include stop signs, yield signs, speed bumps, lane narrowing, traffic calming installations, school zones, pedestrian crosswalks, railroad crossings, construction zones, physical or electronic devices regulating traffic flow, safety signage, pavement markings, warning lights, or the like. As explained above, these points of interest are locations where hard braking may be expected or necessary due to environmental factors, legal requirements, or safety considerations. Additionally, or alternatively, alert engine 216 may apply rules to determine when to provide alerts for other types of unsafe driving activities.

Reporting engine 217 may include one or more processes for reporting raw and/or processed data collected and/or generated during one or more trips in a vehicle. Reporting engine 216 may report such raw and/or processed data to a remote server system, such as vehicle telematics server system 110 for additional processing, as described further herein. Reporting engine 217 may report such raw and/or processed data in real-time as it is collected and/or generated, at predefined intervals during a trip in a vehicle, after detecting the conclusion of a trip, once a day, once a week, or another suitable frequency depending on the additional processing that will be performed on the data. Information reported by reporting engine 217 may include the number and types of unsafe driving activities detected during a trip in a vehicle, the severities of the unsafe driving activities, contextual information about the unsafe driving activities (e.g., whether a hard braking event occurred within a threshold distance of a traffic signal), and/or the raw telematics data used to detect such unsafe driving activities.

Vehicle telematics server system 110 may include one or more software and/or hardware components configured to perform some or all of the functionalities described above with respect to detection and alerting device 210. For example, vehicle telematics server system may include one or more processes configured to collect raw and/or processed telematics data associated with operation of vehicle, analyze the telematics data to detect unsafe driving activities, and/or generate driving scores for drivers and/or vehicles. For example, and as illustrated, vehicle telematics server system 110 includes scoring engine 232. Additionally, or alternatively, vehicle telematics server system 110 may include one or more components configured to process and provide map data, such as the locations of traffic signals within a geographic region, to detection and alerting devices. For example, and as illustrated, vehicle telematics server system 110 includes map data engine 231 and traffic signal datastore 234. Vehicle telematics server system 110 may further include processing system 233 that can coordinate the execution of the various functionalities provided by the plurality of hardware and/or software components, in addition to communicating with the one or more data stores and/or databases.

Map data engine 231 may include one or more processes for obtaining map data, identifying locations of traffic signals in the map data, and storing the locations of the traffic signals in traffic signal datastore 234. While described primarily in relation to identifying locations of traffic signals, map data engine 231 may further identify locations of other points of interest in the map data for storage. Map data engine 231 may obtain map data from one or more sources, such as map data server system 120, as described above. Map data engine 231 may identify the locations of traffic signals from the map data and store the locations of the traffic signals in traffic signal datastore 234. In some embodiments, the locations of traffic signals in traffic signal datastore 234 are stored in association with a larger road network datastore. For example, the existence and/or locations of traffic signals may be stored as static attributes for a road segment and/or intersection between connecting road segments in a graph database. Additionally, or alternatively, traffic signals may be stored in traffic signal datastore 234 as a k-d tree, as described above in relation to location services engine 212.

Map data engine 231 may include one or more processes for providing the locations of traffic signals to one or more detection and alerting devices, such as detection and alerting device 210. For example, and as described above, in response to receiving a request from location services engine 212 specifying a geographic region, map data engine 231 may identify the traffic signals from traffic signal datastore 234 that are located within the geographic region, and transmit the list of traffic signals and their locations to location services engine 212. In some embodiments, map data engine 231 identifies the geographic region within which traffic signals will be identified. For example, map data engine 231 may identify traffic signals within a predefined radius of a location specified by location services engine 212. Additionally, or alternatively, map data engine 231 may provide updated lists of traffic signals at predefined and/or dynamic intervals in a similar manner as described above in relation to location services engine 212.

Scoring engine 232 may include one or more processes for analyzing instances of safe versus unsafe driving activities (e.g., from reporting engine 217) performed by a user to generate one or more scores. In some embodiments, analyzing the instances of safe versus unsafe driving activities may include analyzing raw telematics data (e.g., from reporting engine 217) to identify and/or confirm the occurrence of safe and unsafe driving activities. The scores for a user may include overall scores and/or classifications of a user's general driving abilities and/or risk factors. For example, an overall score for a user may indicate whether the user is generally a safer driver or a more risky driver. The scores for a user may include individual trip scores indicating the general performance of a driver for each individual trip in a vehicle. The scores for a user may include driving behavior scores for various safe and unsafe driving activities. Driving behavior scores may be representative of the frequency with which a driver performs various safe and unsafe driving behaviors, such as how frequently during each trip a user performs hard braking maneuver, how often a user interacts with their mobile device during trips, how often and/or the percentage of time the user adheres to posted speed limits, or the like.

As described above in relation to alerting engine 216, scoring engine 232 may apply one or more rules to each occurrence of a safe and/or unsafe driving activity to determine whether the occurrence of the activity will be considered in the generation of the various scores for a user. For example, scoring engine 232 may dismiss or otherwise ignore occurrences of hard braking activities that occur within a threshold distance of a traffic signal. Scoring engine 232 may perform determine and/or verify whether such instances of hard braking occur within a threshold distance of a traffic signal in a similar manner as described above in relation to alert engine 216 and location services engine 212. For example, in response to receiving an indication of a hard braking event, scoring engine 232 and/or map data engine 231 may identify the traffic signal in traffic signal datastore 234 that is nearest to the location of the hard braking event, determine the distance between the locations of the hard braking event and the nearest traffic signal, and compare the distance to the threshold distance.

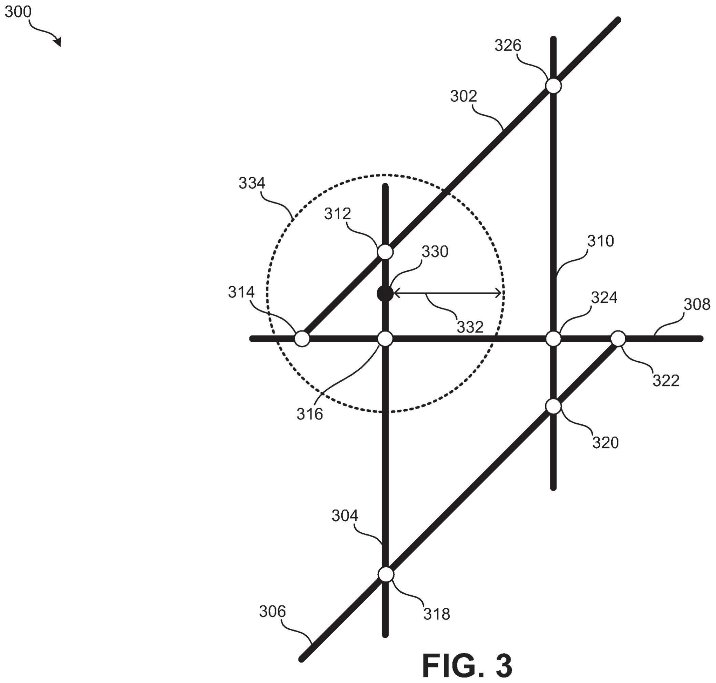

**FIG. 3** illustrates a road map 300 including the locations of traffic signals within a geographic area. As illustrated, the geographic area may include first road 302, second road 304, third road 306, fourth road 308, and fifth road 310. As further illustrated, first road 302 includes: first traffic signal 312 at an intersection with second road 304; second traffic signal 314 at an intersection with fourth road 308; and third traffic signal 326 at an intersection with fifth road 310. Second road 304 includes: fourth traffic signal 316 at an intersection with fourth road 308; and fifth traffic signal 318 at an intersection with third road 306. Third road 306 includes: sixth traffic signal 320 at an intersection with fifth road 310 and seventh traffic signal 322 at an intersection with fourth road 308. Lastly, fifth road 310 includes eighth traffic signal 324 at the intersection with fourth road 308.

As described above in relation to map data engine 231, the locations of the traffic signals within the geographic area represented by road map 300 may be identified from digital map data and stored in a datastore, such as traffic signal datastore 234. While illustrated as a relatively small geographic area comprising five roads and eight traffic signals, the methods and systems described herein can be used to identify and store the locations of traffic signals across larger geographic areas, such as a city, a county, a state, or an entire country.

As further described above in relation to location services engine 212, a subset of the traffic signals within the geographic area represented by road map 300 may be identified and provided to detection and alerting devices disposed in vehicles, such as detection and alerting device 210. Additionally, or alternatively, the subset of the traffic signals may be identified by the detection and alerting devices. Providing and/or identifying a subset of the traffic signals within a geographic area may improve the speed with which detection and alerting devices can identify the nearest traffic signal to the location of a hard braking event.

In some embodiments, the predefined threshold alerting distance may be dynamically calculated using formulas that account for vehicle speed, braking capability, and typical driver reaction time. For example, the threshold distance may be computed as D = v × t_r + (v²) / (2 × a_max), where v is the vehicle speed at the start of the deceleration event, t_r is the estimated driver reaction time, and a_max is the maximum deceleration rate for the vehicle under typical conditions. The system may adapt these parameters based on vehicle type, road surface conditions, or user preferences, and may update the threshold in real time as the drive progresses.

In some embodiments, the subset of the traffic signals in the geographic area are identified from within a sub-region based on a current location of a vehicle and/or predefined location, such as the location of a residence associated with a vehicle. For example, and as illustrated, based on current location 330 of a vehicle, first traffic signal 312, second traffic signal 314, and fourth traffic signal 316 may be identified based on their locations being within sub-region 334 that includes current location 330. As further described above, the sub-region may include a circular, polygonal, or other similarly suitable shaped region surrounding the current location of a vehicle. For example, and as further illustrated, sub-region 334 includes a circular region centered around current location 330 with radius 332. Radius 332 may be statically and/or dynamically determined. For example, radius 332 may be a predefined distance based on the density of traffic signals within the geographic area. As another example, radius 332 may be dynamically determined based on a current speed of the vehicle.

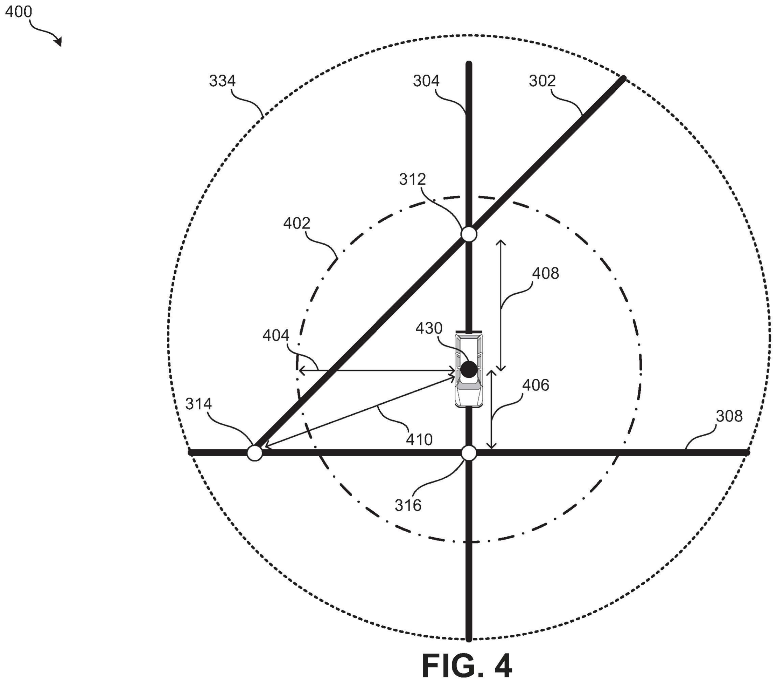

**FIG. 4** illustrates a road map 400 including the locations of a subset of traffic signals within a geographic area. Road map 400 represents an expanded view of sub-region 334 of road map 300, as described above, including: first road 302, second road 304, fourth road 308, first traffic signal 312, second traffic signal 314, and fourth traffic signal 316. As described above, the locations of first traffic signal 312, second traffic signal 314, and fourth traffic signal 316 may be provided to a detection and alerting device, such as detection and alerting device 210, from a vehicle telematics server system, such as vehicle telematics server system 110, based on an initial location of a vehicle in which the detection and alerting device is disposed. Additionally, or alternatively, the detection and alerting device may identify the traffic signals from a larger list of traffic signals provided to it.

As further described in relation to location services engine 212 and alert engine 216, the locations of the traffic signals within sub-region 334 may be used to determine whether to provide an alert to a user in response to detecting the occurrence of a hard braking event. For example, and as illustrated, in response to detecting the occurrence of a hard braking event at event location 430, a detection and alerting device may determine: first distance 406 between event location 430 and fourth traffic signal 316; second distance 408 between event location 430 and first traffic signal 312; and third distance 410 between event location 430 and second traffic signal 314. The detection and alerting device may compare first distance 406, second distance 408, and third distance 410 with a minimum threshold alerting distance. In response to determining that any of the traffic signals within sub-region 334 are within the minimum threshold alerting distance of event location 430, detection and alerting device may silence, ignore, dismiss, or otherwise forego the presentation of an alert to the driver of the vehicle. Additionally, or alternatively, the detection and alerting device may compare only the shortest distance to the minimum threshold alerting distance.

As further described above, the detection and alerting device may apply one or more filters to the list of traffic signals within sub-region 334 before and/or after determining the distances between them and event location 430. For example, and as illustrated, the detection and alerting device may filter the list of traffic signals within sub-region 334 to those that are within predefined distance 404 of event location 430. As described above in relation to location services engine 212, filtering the list of traffic signals to those that are within predefined distance 404 may include identifying area 402 within sub-region 334 that includes all points within predefined distance 404 of event location 430 and performing a range search (e.g., within a k-d tree) to identify the traffic signals that are within area 402.

In some embodiments, the detection and alerting device filters the list of traffic signals to those that are located on a same road and/or road segment as the road and/or road segment upon which the hard braking event occurred. For example, the traffic signals within sub-region 334 may be filtered to those that are located along second road 304, and/or a particular sub-segment of second road 304 (e.g., the segment between the intersections of second road 304 with first road 302 and fourth road 308), based on a determination that event location 430 is on second road 304 and/or the particular sub-segment of second road 304.

Additionally, or alternatively, the detection and alerting device may determine which of the traffic signals within sub-region 334 and/or area 402 could have been applicable to the vehicle at the time when the hard braking event occurred. Determining whether a traffic signal could have been applicable may be based on the direction of travel of the vehicle at the time of the hard braking event in relation to the location of the traffic signal. For example, based on a determination that the vehicle was moving toward fourth traffic signal 316 and away from first traffic signal 316, the detection and alerting device may exclude first traffic signal 316 from consideration when determining whether the hard braking event occurred within the minimum threshold alerting distance. Additionally, or alternatively, determining whether a traffic signal could have been applicable may be based on the road and/or road segment upon which the vehicle was traveling at the time of the hard braking event. For example, based on a determination that event location 430 is along second road 304, the detection and alerting device may exclude second traffic signal 314 from further consideration.

To determine whether a traffic signal is applicable to the vehicle at the time of a hard braking event, the system may perform map-matching, wherein the detected vehicle location and trajectory are matched to known road segments using digital map data and heading information. Direction of travel may be inferred from sequential GNSS positions, vehicle heading sensors, or accelerometer data. At complex intersections or multi-road areas, the system may analyze historical trip data, intersection geometry, or traffic flow patterns to more accurately determine applicability. For example, if the vehicle is detected as moving toward an intersection at which a traffic signal controls only cross traffic, the system may exclude that signal from consideration. These algorithms help reduce false positives and ensure that alerts are contextually appropriate.

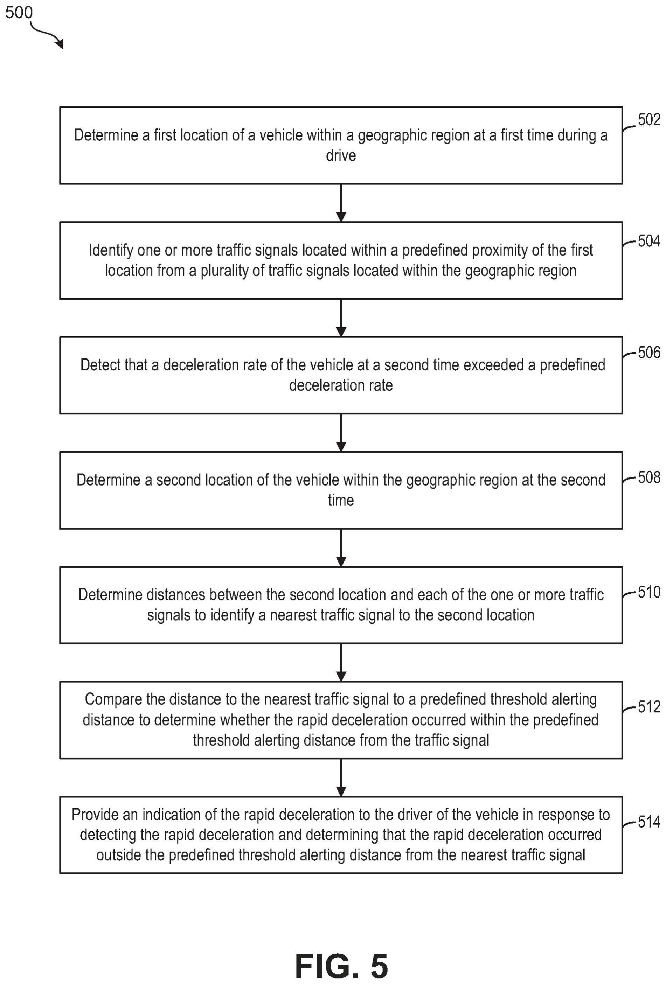

**FIG. 5** illustrates a method 500 of providing alerts for unsafe driving activities, according to some aspects of the present disclosure. Steps of method 500 may be performed in any order and/or in parallel, and one or more steps of method 500 may be optionally performed. One or more steps of method 500 may be performed by one or more processors. Method 500 may be implemented as a computer-readable medium or computer program product comprising instructions which, when the program is executed by one or more processors, cause the one or more processors to carry out the steps of method 500.

Method 500 may be performed by a variety of computing devices, electronic systems, or combinations thereof, configured to collect, process, and analyze sensor and geospatial data during vehicle operation. In some embodiments, the method is executed by an application running on a mobile device, such as a smartphone, tablet, or wearable device, which is disposed in the vehicle during a drive. The mobile device may operate independently or in conjunction with other in-vehicle systems, such as a telematics device installed in the vehicle (e.g., an OBD-II dongle, dedicated telematics hardware, or an IoT tag), or integrated vehicle computing platforms (e.g., infotainment systems, head units, or advanced driver-assistance systems (ADAS)). These devices may communicate and exchange data locally (e.g., via Bluetooth^{®}, Wi-Fi^{®}, or USB) or remotely via wireless networks (e.g., cellular, satellite, mesh, or cloud-based connections).

The system may receive inputs from a diverse array of sensors, including but not limited to: GNSS receivers for location and speed data; accelerometers and gyroscopes for motion and orientation analysis; magnetometers for heading determination; vehicle on-board sensors accessed via OBD-II/CAN bus for direct vehicle telemetry (e.g., speed, engine status, brake application); barometers, proximity sensors, or cameras for environmental context; and wireless transceivers for network-based positioning. Additional input may include digital map data, traffic signal locations, and other points of interest, retrieved from remote map data server systems or vehicle telematics server systems. The outputs of the method may comprise real-time or delayed notifications, alerts, or reports delivered to the user via the device's physical interfaces (e.g., audio, visual, haptic), as well as logged event data for subsequent analysis, reporting, or integration with insurance or fleet management platforms. In distributed or cloud-based embodiments, portions of the method may be performed across multiple devices or servers, with data synchronized and processed collaboratively to enhance accuracy, scalability, and user experience.

Step 502 includes determining a first location of a vehicle within a geographic region at a first time (e.g., by location services engine 212 of detection and alerting device 210). The first location may be determined by an application executing on a mobile device disposed in the vehicle. The location may be determined from GNSS signals received by a GNSS receiver disposed in the vehicle during the drive at the first time, such as a GPS receiver, or from other positioning technologies including but not limited to Wi-Fi-based geolocation, cellular tower triangulation, or combinations thereof. The GNSS receiver may be integrated into the mobile device, part of a separate device (e.g., a telematics device installed in the vehicle), and/or may be part of the vehicle's built-in systems. In some embodiments, the first location is further refined by sensor fusion algorithms that combine GNSS measurements with inertial sensor data (e.g., accelerometer, gyroscope, magnetometer) to improve location accuracy, particularly in environments where satellite signals may be weak or unreliable (e.g., urban canyons, tunnels, parking garages). The first time may correspond to a start time of a drive in the vehicle, an initial sampling point (e.g., the time at which an application executing on a mobile device becomes active and/or begins receiving location measurements), or another time during the drive (e.g., at a predefined interval).

In some embodiments, the first location may be determined or validated by referencing recent historical data or vehicle trip logs to identify a likely starting position, such as the typical parking location of the vehicle (e.g., the driver's home or workplace). The geographic region in which the first location is determined may range from a small neighborhood to an entire city, state, or any other appropriate area, and may be defined dynamically based on context, such as the anticipated length of the upcoming drive.

Step 504 includes identifying one or more traffic signals located within a predefined proximity of the first location from a plurality of traffic signals located within the geographic region (e.g., by location services engine 212). As described above, the one or more traffic signals located within the predefined proximity may be identified without determining the distance between the first location and the locations of the one or more traffic signals (e.g., by executing a range search within a k-d tree or other tree-based data structure). Additionally, or alternatively, the one or more traffic signals may be identified by comparing the distances between the first location and each of the plurality of traffic signals to the predefined proximity distance and selecting the traffic signals with distances that are less than the predefined proximity distance.

The plurality of traffic signals may be received and stored locally on a mobile device prior to identification of the one or more traffic signals located within the predefined proximity of the first location. For example, upon activation, an application executing on the mobile device may request and/or receive the plurality of traffic signals and their associated locations from a remote server system (e.g., from map data server system 120 and/or vehicle telematics server system 110). The plurality of traffic signals may be organized in a data structure optimized for spatial queries, such as a k-dimensional (k-d) tree, R-tree, or other multidimensional index, to facilitate efficient retrieval of nearby traffic signal locations.

In some embodiments, the identification of traffic signals within the predefined proximity is performed by executing a range search in the k-d tree based on the coordinates of the first location and a predefined proximity distance (e.g., a radius or bounding box). The range search may rapidly exclude traffic signals that are outside the specified proximity, thereby reducing computational overhead. Alternatively or additionally, the identification may be accomplished by calculating the distance (e.g., Euclidean, Haversine, or Manhattan distance) between the first location and each traffic signal's coordinates, and selecting those traffic signals for which the distance is less than or equal to the predefined proximity distance.

As described above, the predefined proximity may be a fixed value (e.g., 500 meters, 1 mile, 5 miles, 10 miles, etc.), or may be dynamically determined based on contextual factors such as average vehicle speed, road type, expected trip distance, urban density, or user-configurable settings. In some embodiments, the proximity region may be defined by a non-circular geometry, such as a polygonal area, a conical region aligned with the direction of travel, or a corridor along a predicted route, to better reflect real-world driving conditions and anticipated vehicle movements.

While described in relation to identifying one or more traffic signals from a plurality of traffic signals, a plurality of geographic coordinates corresponding to the locations of traffic signals, or other points of interest, may be received, from which a subset of geographic coordinates within the predefined proximity of the first location may be generated for use in subsequent steps of the method.

Step 506 includes detecting that a deceleration rate of the vehicle at a second time exceeded a predefined deceleration rate. The detection may be performed by analyzing motion measurements collected by one or more sensors disposed in the vehicle during the drive (e.g., device sensors 211 of detection and alerting device 210). These sensors may include, but are not limited to: accelerometers, gyroscopes, GNSS receivers, vehicle on-board sensors accessible via OBD-II or CAN bus, and/or additional sensors such as magnetometers or barometers.

In some embodiments, detecting that the deceleration rate of the vehicle exceeded a predefined deceleration rate comprises filtering raw sensor data to remove noise and isolate motion attributable to the vehicle as opposed to motion caused by user interaction with the sensor and/or the electronic device that includes the sensor, such as a mobile device, road surface vibration, or other external factors. Raw sensor data may be filtered using digital signal processing techniques (e.g., low-pass, band-pass, or Kalman filtering), as well as machine learning models trained to distinguish vehicular motion signatures.

In some embodiments, step 506 additionally, or alternatively, includes detecting that a deceleration rate of the vehicle exceeded a predefined deceleration rate during a time period leading up to the second time. The time period may be defined as a fixed or variable window of time immediately preceding the second time, and may be incrementally advanced as motion measurements are collected during the drive. The length of the time period can be selected based on several factors, including the sampling rate of the sensors, the typical duration of hard braking or rapid deceleration events, and the current operating context of the vehicle. For example, a higher sensor sampling rate may enable the use of shorter time periods, such as windows of half a second or one second, while a lower sampling rate may necessitate longer time periods to ensure sufficient data density for accurate analysis. The time period may also be tailored to match the expected duration of deceleration events, which can vary depending on vehicle type, road conditions, or user settings. In some embodiments, the system dynamically adjusts the time period based on real-time or recent vehicle speed, the detected road environment, or historical driving behavior, such that longer time periods may be used at higher speeds to capture extended braking maneuvers, while shorter periods may be preferred for lower-speed or urban scenarios.

As motion measurements are received from one or more sensors during the drive, the detection and alerting device may implement a sliding window approach, continuously or periodically advancing the time period forward in increments (for example, every tenth of a second, quarter of a second, or another suitable interval). For each increment, the system evaluates whether the deceleration rate of the vehicle during the time period exceeds the predefined threshold. The analysis within each time period may include identifying the maximum, median, or minimum acceleration value recorded by the sensors, and comparing this value to the predefined deceleration threshold. Alternatively, or in addition, the system may analyze changes in vehicle speed during the time period, determining whether the speed differential divided by the time interval yields a deceleration rate greater than the threshold. For instance, if the vehicle's speed decreases significantly over a short time period, and the calculated rate of deceleration is above the threshold, the system will detect this as a hard braking event.

In some embodiments, both acceleration profiles and speed differentials may be analyzed together to improve the robustness of event detection, and the system may further refine its analysis by considering contextual data such as road conditions, weather, or vehicle-specific parameters. The evaluation may occur continuously throughout the drive or at periodic intervals, depending on computational constraints and the desired sensitivity to deceleration events. Upon detecting that the deceleration rate during a given time period exceeds the threshold, the system may log the event with associated metadata, including the specific time period during which the event was detected, the maximum, median, or minimum acceleration values, the relevant speed differential, and the location and context of the event.

Step 508 includes determining a second location of the vehicle within the geographic region at the second time (e.g., by location services engine 212 of detection and alerting device 210). Additionally, or alternatively, step 508 may include determining the second location of the vehicle during the time period for which the measurements indicated that the deceleration rate of the vehicle exceeded the predefined deceleration rate. The second location may be obtained from GNSS signals received by a GNSS receiver at or near the time the deceleration event was detected, and may be refined by synchronizing or interpolating the sensor readings to accurately align the deceleration event with the corresponding spatial coordinates.

In some embodiments, the second location may be determined as a single point (e.g., the vehicle's position at the peak deceleration value), as an average or representative location over a time window encompassing the deceleration event, or as a sequence of positions representing the vehicle's trajectory during the deceleration period. Additional sources of location information (such as wheel speed sensors, dead reckoning from inertial measurement units, or fused data from multiple sensors) may be used to improve the precision of the second location, particularly in scenarios where GNSS signal quality is poor or intermittent.

Step 510 includes determining distances between the second location and each of the one or more traffic signals to identify a nearest traffic signal to the second location. Identifying the nearest traffic signal may include comparing the distances for each of the one or more traffic signals and selecting the traffic signal with the smallest distance. The distance calculations may be performed using geographic coordinates associated with the second location and with each traffic signal, utilizing appropriate geospatial algorithms such as Euclidean distance, Haversine formula (for latitude/longitude coordinates), or other suitable geodesic computations. These calculations may be executed in real time or near-real time.

In some embodiments, the system may compute and record the distance between the second location and each traffic signal in the subset, thereby generating a plurality of distance measurements. The system may then identify the shortest distance among the plurality of computed distances, which corresponds to the nearest traffic signal relative to the vehicle's location at or during the deceleration event.

Additionally, or alternatively, the system may further refine the subset of traffic signals prior to or after distance computations, such as by filtering to those traffic signals that are located along the same road segment or sub-segment as the vehicle, or to those that are determined to be "applicable" to the vehicle's direction of travel at the relevant time. This may be performed by referencing digital map data, road network connectivity, or inferred vehicle trajectories derived from historical trip data.

Step 512 includes comparing the distance to the nearest traffic signal to a predefined threshold alerting distance to determine whether the rapid deceleration occurred within the predefined threshold alerting distance of the nearest traffic signal. The predefined threshold alerting distance may be statically configured (e.g., a fixed value such as 100 meters, 250 meters, or 1,000 feet), or may be dynamically determined based on contextual factors such as the speed of the vehicle at the time of the deceleration event, the type of road on which the event occurred, the density of traffic signals in the geographic region, or user- or administrator-configurable settings.

In some embodiments, the speed of the vehicle at the start of the time period leading up to the deceleration event is used to dynamically compute an appropriate threshold alerting distance, with higher speeds resulting in longer thresholds to account for increased stopping distances and lower speeds yielding shorter thresholds. The threshold may be computed using physics-based formulas, empirical data, or adaptive algorithms that take into account historical trip data, environmental conditions, or vehicle type.

The comparison may be performed by evaluating whether the shortest distance between the second location and the nearest traffic signal is greater than or equal to the predefined threshold alerting distance. If the shortest distance meets or exceeds the threshold, it may be inferred that the detected deceleration event is unlikely to be attributable to a nearby traffic signal (e.g., the hard braking did not occur in proximity to a traffic signal), whereas if the shortest distance is less than the threshold, the event may be considered as potentially related to the traffic signal, and further analysis may be performed to confirm applicability (e.g., whether the signal is on the same road segment and in the direction of travel).

In some embodiments, additional distances are compared to the predefined threshold alerting distance in response to determining that the shortest distance between the second location and the nearest traffic signal is less than the threshold and/or in response to determining that the nearest traffic signal was not applicable to the vehicle. For example, in the event that multiple traffic signals are located within the predefined threshold alerting distance, and that the nearest traffic signal was not applicable to the vehicle, the next closest traffic signal within the predefined threshold alerting distance may be then be evaluated for applicability, and so on, until an applicable traffic signal within the threshold distance is identified or all traffic signals within the threshold distance have been determined to have not been applicable to the vehicle.

Step 514 includes providing an indication of the rapid deceleration to the driver of the vehicle (e.g., by alert engine 216) in response to detecting the rapid deceleration and determining that the rapid deceleration occurred outside of the predefined threshold alerting distance to the nearest traffic signal. The indication may be generated and output via one or more physical interfaces of the mobile device or detection and alerting device, which may include audio, visual, and/or haptic feedback modalities.

For example, an audible alert (such as a tone, beep, spoken message, or chime) may be generated and played through the device's built-in speaker or through a connected vehicle audio system. Visual alerts may include on-screen notifications, pop-up messages, flashing lights, or dashboard indicators. Haptic feedback may be provided via vibration motors, tactile pulses, or other mechanisms to deliver a discrete physical alert to the driver.

In some embodiments, the characteristics of the alert may be tailored to the severity or context of the detected deceleration event, such as providing more urgent or prominent alerts for higher-magnitude hard braking events, or modulating the alert type based on whether the event occurred in a high-risk environment (e.g., near intersections, in poor weather, or during heavy traffic). The system may also log the alert event, along with associated metadata (e.g., timestamp, location, severity, contextual factors), for subsequent review, reporting, or insurance assessment.

Additionally, or alternatively, the system may suppress, filter, or modify the alert if it is determined that the deceleration event occurred within the threshold alerting distance to the nearest traffic signal and that the signal was applicable to the vehicle's route or direction of travel (e.g., the event was likely a safe or necessary maneuver, such as stopping for a red light). This conditional alert logic reduces unnecessary distractions and avoids penalizing drivers for appropriate driving responses.

The presentation of alerts may also be governed by user preferences, regulatory requirements, or adaptive algorithms that seek to balance safety, driver feedback, and user experience. Alerts may be further conditioned on whether the user is actively driving or is a passenger, as determined by driving detection engine 214, and may be aggregated, delayed, or prioritized based on the frequency or severity of detected events during a trip

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

While method 500 is described above primarily in relation to the detection of hard braking events and their occurrence in proximity to traffic signals, the principles and techniques disclosed herein are broadly applicable to the detection, analysis, and alerting of other types of driving behaviors in relation to other points of interest. For example, similar methods may be employed to monitor and provide feedback on behaviors such as speeding, aggressive acceleration, swerving, distracted driving, or prolonged idling, utilizing analogous sensor data and analytical techniques. Likewise, the contextual analysis may be adapted to consider additional or alternative points of interest within the driving environment, including but not limited to stop signs, yield signs, pedestrian crosswalks, school zones, railroad crossings, speed bumps, construction zones, or areas of frequent congestion. By correlating detected driving maneuvers with the locations and attributes of these points of interest, the system may more accurately differentiate between unsafe, safe, or necessary driving actions, thereby improving the relevance of alerts, reducing false positives, and enabling more precise assessments of driving behavior for purposes such as driver coaching, risk profiling, or insurance underwriting. The modularity and extensibility of the method and its underlying system architecture facilitate adaptation to evolving use cases, regulatory requirements, and technological advancements in sensor, mapping, and vehicle connectivity domains.

For example, when monitoring swerving behavior, the system may analyze lateral accelerometer data in conjunction with map data indicating the presence of sharp curves, lane merges, or construction zones. Aggressive acceleration events may be correlated with proximity to speed bumps, stop signs, or school zones to distinguish necessary maneuvers from unsafe driving. For distracted driving detection, sensor data from cameras or device usage logs may be cross-referenced with locations of pedestrian crossings or areas of high pedestrian density to prioritize alerts. The system architecture is designed to accommodate new points of interest and driving behaviors as regulatory standards, safety concerns, and technology evolve.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Implementation of the techniques, blocks, steps, and means described above may be done in various ways. For example, these techniques, blocks, steps, and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), mask programmable gate array (MPGA), processors, controllers, micro-controllers, microprocessors, other electronic units designed to perform the functions described above, and/or combinations thereof.

Also, it is noted that the embodiments and/or examples may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, one or more of the operations may be performed out-of-order from the order depicted. A process may terminate when its operations are completed or return to a previous step or block. A process could have additional steps or blocks not included in the figure. A process may correspond to a method, a function, a procedure, a subroutine, a subprogram, etc. When a process corresponds to a function, its termination corresponds to a return of the function to a calling function or a main function.

Furthermore, the devices and/or systems described herein may be implemented by hardware, software, scripting languages, firmware, middleware, microcode, hardware description languages, and/or any combination thereof. When implemented in software, firmware, middleware, scripting language, and/or microcode, the program code, or code segments to perform the necessary tasks may be stored in a non-transitory computer-readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any non-transitory computer-readable medium tangibly embodying instructions may be used in implementing the methodologies described herein. For example, software codes may be stored in a memory. Memory may be implemented within the processor or external to the processor. As used herein, the term "memory" refers to any type of volatile, non-volatile, or other storage medium and is not to be limited to any particular type of memory, number of memories, or type of media upon which memory is stored.

Moreover, as disclosed herein, the term "storage" may represent one or more memories for storing data, including read only memory (ROM), random access memory (RAM), magnetic RAM, cache memory, magnetic disk storage mediums, optical storage mediums, flash memory devices, and/or other machine-readable mediums for storing information. The term "computer-readable medium" includes, but is not limited to, portable or fixed storage devices, optical storage devices, and/or various other storage mediums capable of storing that contain or carry instruction(s) and/or data.

The examples and embodiments described herein are for illustrative purposes only. Various modifications or changes in light thereof will be apparent to persons skilled in the art. These are to be included within the spirit and purview of this application, and the scope of the appended claims, which follow.

## Claims

1. A computer-implemented method of providing alerts for unsafe driving activities, the computer-implemented method comprising:
receiving, by an application executing on a mobile device, a plurality of geographic coordinates, each corresponding to a location of a point of interest located within a geographic region;
receiving, by the application while the mobile device is disposed in a vehicle during a drive, measurements from one or more sensors disposed in the vehicle during the drive;
determining, by the application at a first time during the drive, a first location of the vehicle within the geographic region at the first time based on the measurements;
generating, by the application from the plurality of geographic coordinates, a subset of the plurality of geographic coordinates that are within a predefined proximity of the first location;
detecting, by the application at a second time during the drive, that a deceleration rate of the vehicle exceeded a predefined deceleration rate during a time period leading up to the second time based on the measurements collected by the one or more sensors;
determining, by the application, a second location of the vehicle within the geographic region during the time period based on the measurements;
generating, by the application, a plurality of distance measurements, each corresponding to a distance between the second location and a respective geographic coordinate of the subset of geographic coordinates;
comparing, by the application, a shortest distance measurement of the plurality of distance measurements to a predefined threshold alerting distance to determine whether the shortest distance measurement is greater than or equal to the predefined threshold alerting distance; and
causing, by the application, a physical interface of the mobile device to output an indication of hard braking to a user of the mobile device during the drive in response to detecting that the deceleration rate of the vehicle exceeded the predefined deceleration rate during the time period and determining that the shortest distance measurement is greater than or equal to the predefined threshold alerting distance.

2. The computer-implemented method of claim 1, wherein generating the subset of geographic coordinates comprises:
generating a second plurality of distance measurements, each corresponding to a distance between the first location and a respective geographic coordinate of the plurality of geographic coordinates; and
selecting, for inclusion in the subset of geographic coordinates, each geographic coordinate of the plurality of geographic coordinates having a corresponding distance measurement of the second plurality of distance measurements that is less than or equal to a predefined proximity distance.

3. The computer-implemented method of claim 1, further comprising storing the plurality of geographic coordinates as a plurality of nodes in a k-dimensional tree.

4. The computer-implemented method of claim 3, wherein generating the subset of geographic coordinates comprises searching within the k-dimensional tree for nodes that are within a range of geographic coordinates corresponding to the predefined proximity of the first location.

5. The computer-implemented method of claim 1, further comprising transmitting a request for geographic coordinates associated with traffic signals located within the geographic region to a remote server system, wherein the plurality of geographic coordinates are received from the remote server system in response to the request.

6. The computer-implemented method of claim 1, further comprising:
determining an initial location of the vehicle at a start time of the drive that is prior to the first time; and
generating, from the plurality of geographic coordinates, an initial subset of the plurality of geographic coordinates that are within the predefined proximity of the initial location.

7. The computer-implemented method of claim 6, further comprising updating the initial subset of the plurality of geographic coordinates at predefined time intervals during the drive, wherein the predefined proximity is based on a maximum travel distance of the vehicle within each predefined time interval.

8. The computer-implemented method of claim 1, wherein the one or more sensors disposed in the vehicle comprise a Global Navigation Satellite System (GNSS) receiver, and the measurements comprise location measurements generated by the GNSS receiver.

9. The computer-implemented method of claim 1, wherein the one or more sensors disposed in the vehicle comprise an accelerometer of the mobile device that measures movement of the mobile device, and wherein detecting that a deceleration rate of the vehicle exceeded the predefined deceleration rate comprises:
filtering the movement measurements to identify a subset of the movement measurements that are attributable to the vehicle; and
detecting, from the subset of the movement measurements, a forward deceleration that is greater than or equal to the predefined deceleration rate.

10. The computer-implemented method of claim 1, further comprising:
detecting, at a third time during the drive, that the deceleration rate of the vehicle exceeded the predefined deceleration rate during a second time period leading up to the third time based on the measurements collected by the one or more sensors;
determining a third location of the vehicle within the geographic region during the second time period based on the measurements;
generating a second plurality of distance measurements, each corresponding to a distance between the third location and a respective geographic coordinate of the subset of geographic coordinates;
determining that a shortest distance measurement of the second plurality of distance measurements is less than the predefined threshold alerting distance;
determining whether the point of interest corresponding to the geographic coordinate having the shortest distance measurement to the third location was applicable to the vehicle during the second time period; and
causing the physical interface of the mobile device to output a second indication of hard braking to the user during the drive in response to detecting that the deceleration rate of the vehicle exceeded the predefined deceleration rate during the second time period and determining that the point of interest was not applicable to the vehicle.

11. The computer-implemented method of claim 10, wherein determining whether the point of interest was applicable to the vehicle comprises:
determining whether the point of interest is located on a same road segment as the vehicle during the second time period; and
determining whether the vehicle was moving towards or away from the point of interest during the second time period.

12. The computer-implemented method of claim 1, further comprising:
determining a speed of the vehicle at a start of the time period, wherein the predefined threshold alerting distance is based on the speed of the vehicle at the start of the time period.

13. The computer-implemented method of claim 1, further comprising:
determining, at a third time during the drive, that a current location of the vehicle is within a predefined distance of a geofence boundary defined based on the predefined proximity of the first location; and
generating an updated subset of the plurality of geographic coordinates that are within the predefined proximity of the current location.

14. A system comprising:
an electronic device comprising:
one or more processors; and
a computer-readable medium comprising instructions that, when executed by the one or more processors, cause the one or more processors to perform operations comprising:
receiving a plurality of geographic coordinates, each corresponding to a location of point of interest located within a geographic region;
receiving, while the electronic device is disposed in a vehicle during a drive, measurements from one or more sensors disposed in the vehicle during the drive;
determining, at a first time during the drive, a first location of the vehicle within the geographic region at the first time based on the measurements;
generating, from the plurality of geographic coordinates, a subset of the plurality of geographic coordinates that are within a predefined proximity of the first location;
detecting, at a second time during the drive, that a deceleration rate of the vehicle exceeded a predefined deceleration rate during a time period leading up to the second time based on the measurements collected by the one or more sensors;
determining a second location of the vehicle within the geographic region during the time period based on the measurements;
generating a plurality of distance measurements, each corresponding to a distance between the second location and a respective geographic coordinate of the subset of geographic coordinates;
comparing a shortest distance measurement of the plurality of distance measurements to a predefined threshold alerting distance to determine whether the shortest distance measurement is greater than or equal to the predefined threshold alerting distance; and
causing a physical interface of the electronic device to output an indication of hard braking to a user of the electronic device during the drive in response to detecting that the deceleration rate of the vehicle exceeded the predefined deceleration rate during the time period and determining that the shortest distance measurement is greater than or equal to the predefined threshold alerting distance.

15. A non-transitory computer-readable medium comprising instructions that, when executed by one or more processors, cause the one or more processors to perform operations comprising:
receiving, by an application executing on a mobile device, a plurality of geographic coordinates, each corresponding to a location of a point of interest located within a geographic region;
receiving, by the application while the mobile device is disposed in a vehicle during a drive, measurements from one or more sensors disposed in the vehicle during the drive;
determining, by the application at a first time during the drive, a first location of the vehicle within the geographic region at the first time based on the measurements;
generating, by the application from the plurality of geographic coordinates, a subset of the plurality of geographic coordinates that are within a predefined proximity of the first location;
detecting, by the application at a second time during the drive, that a deceleration rate of the vehicle exceeded a predefined deceleration rate during a time period leading up to the second time based on the measurements collected by the one or more sensors;
determining, by the application, a second location of the vehicle within the geographic region during the time period based on the measurements;
generating, by the application, a plurality of distance measurements, each corresponding to a distance between the second location and a respective geographic coordinate of the subset of geographic coordinates;
comparing, by the application, a shortest distance measurement of the plurality of distance measurements to a predefined threshold alerting distance to determine whether the shortest distance measurement is greater than or equal to the predefined threshold alerting distance; and
causing, by the application, a physical interface of the mobile device to output an indication of hard braking to a user of the mobile device during the drive in response to detecting that the deceleration rate of the vehicle exceeded the predefined deceleration rate during the time period and determining that the shortest distance measurement is greater than or equal to the predefined threshold alerting distance.
